# EUROPEAN PATENT SPECIFICATION

(11) **EP 2 028 854 B1**
(45) Date of publication and mention of the grant of the patent: **27.07.2011**
(21) Application number: 08162798.6
(22) Date of filing: 22.08.2008
(51) Int. Cl.: H04N 5/775

(54) **Efficient method and circuit for using HDMI ports**
Effizientes Verfahren und Schaltung zur Verwendung von HDMI-Ports
Procédé et circuit efficace pour l'utilisation de ports HDMI

(30) Priority: 24.08.2007 TR 200705888
(43) Date of publication of application: 25.02.2009
(73) Proprietor: Vestel Elektronik Sanayi ve Ticaret A.S., 45030 Manisa (TR)
(72) Inventor: Altunlu, Metehan VESTEL ELEKTRONIK SANAYI VE TICARET A.S., 45030 MANISA (TR)
(74) Representative: Cayli, Hülya

(56) References cited:
- US-A1- 2006 001 776
- US-A1- 2007 153 132
- HITACHI ET AL: "HDMI Specification Version 1.3a" INTERNET CITATION, [Online] 10 November 2006 (2006-11-10), XP002476103 Retrieved from the Internet: URL:http://www.hdmi.org/download/HDMISpeci fication13a.pdf> [retrieved on 2008-04-08]

## Description

### Technical Field

The present invention relates to an efficient method and circuit of detecting the presence of connection of external HDMI-compatible devices to HDMI (High Definition Multimedia Interface) ports used particularly in television systems.

### Prior Art

HDMI (High Definition Multimedia Interface) port is an uncompressed fully-digital interface supported by many products nowadays and is used between an audio and video source such as set-top boxes (e.g. digital satellite receiver), DVD players, A/V receivers and an audio- and/or video-playing device, such as a digital television, this interface providing the communication between such external devices and the system equipped with HDMI ports.

More than one HDMI port is currently used on televisions and other video systems for enhancing the user's benefit from the device. A microprocessor provided in a system equipped with more than one HDMI port must identify as to which external device is connected to which HDMI port and must communicate with that port during operation. With respect to prior art, HDMI ports are connected to such ports reserved for the microprocessor itself, and one microprocessor port is occupied for each one HDMI port. Once any operating device (e.g. DVD player, set-top box) is connected to the system, or if any external device connected to the system is turned on, a 5V signal is sent to the microprocessor within the system, so that the microprocessor detects the connection of an operating external device to that HDMI port, or detects the turning-on of such external device connected to that part.

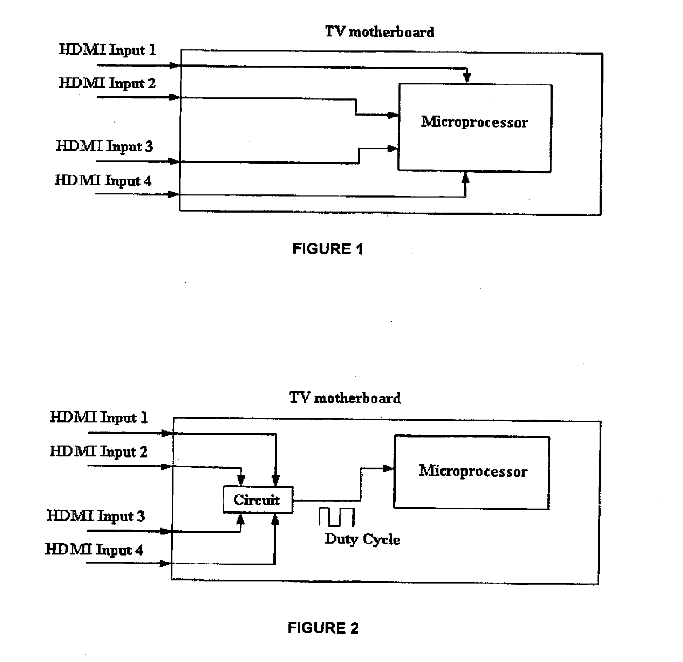

The operating principle is illustrated in Figure 1 of the system, which is used for the communicating the devices connected to HDMI ports with the microprocessor and with the system to which said microprocessor is connected; according to this principle, each HDMI port is connected independently to a port of the microprocessor within the system, such that the number of microprocessor ports used equals the number of HDMI ports.

The system according to the prior art leads to an inefficient utilization of the microprocessor ports, as well as to an increase of the number of ports required with the number of HDMI ports increasing, which gain importance particularly during the system design.

Another approach, US 2007/0153132 A1, relates to a method of intelligently selecting a signal source and an associated apparatus, and more particularly, to a method of intelligently selecting a signal source by intelligently auto-configuring AV inputs and associated apparatus. During the process, used microprocessor receives signals through one pin. However, an audio-video detecting module detects at least one set of signals, not said microprocessor. In the present invention, microprocessor detects connected signals directly.

Moreover, in the present invention, by using duty cycle differences, occupied HDMI ports are detected which is a different method according to US 2007/0153132 A1. Using a kind of pulse width modulation is easily decodable and therefore especially well suited for the task at hand.

Furthermore, US 2007113153132 A1 describes audio and video signal separation in a set of audio-video signals. However, the present invention just describes a method for which HDMI ports are active.

### Objective of Invention

The objective of the present invention is to detect as to which HDMI port/ports is/are occupied by means of connecting external device/devices, by using only one port of the microprocessor in systems comprising a microprocessor and more than one HDMI port.

### Description of Figures

In this description, references will be made to annexed figures outlined as following.
Figure 1 is a schematic block diagram illustrating the case in which each HDMI port is connected to a port of the microprocessor within a television (TV) system according to the prior art.
Figure 2 is a schematic block diagram illustrating the present invention's operating principle on a television (TV) motherboard.
Figure 3 is a block diagram illustrating the state of the circuit at which no external device is connected to the system making use of the present invention.
Figure 4 is a graphic illustrating the state of duty cycle when no external device is connected to the system (the case in Figure 3) making use of the present invention.
Figure 5 is a block diagram illustrating the case in which an external device is connected to the system making use of the present invention.
Figure 6 is a graphic illustrating the state of duty cycle when only one external device is connected to the system (the case in Figure 5) making use of the present invention.
Figure 7 is a block diagram illustrating the case in which external devices are connected to all four HDMI ports of the system making use of the present invention.
Figure 8 is a graphic illustrating the state of duty cycle when no external device is connected to the system making use of the present invention.
Figure 9 is a table illustrating the state in which the duty cycle is high according to the port status in a system making use of the present invention and equipped with four HDMI ports -if the port state is "1" in the table, it is assumed that an external device is connected, and if it is "0", it is assumed that no external device is connected or the latter is turned off.

The terms in the figure are briefly described as following:
R1, R2, R3, R4, R8, R17, R18, R19, R20, R21, R22: resistors of varying magnitudes as expressed in Ohm
C1, C2: capacitors of magnitude of 1 nF (nanofarad)
V1, V2 , V19, V21, V23: 5V generators
V6, V18, V20, V22: 5V generators produced at the HDMI port by an external device
M1, M9, M10, M11: IRF150 type field-effect transistor
555D: integrated timer circuit
VCC: feeding pin of 555D integrated time circuit
TRIGGER: trigger pin of 555D integrated timer circuit
RESET: reset pin of 555D integrated timer circuit
CONTROL: control pin of 555D integrated timer circuit
THRESHOLD: threshold pin of 555D integrated timer circuit
DISCHARGE: discharge pin of 555D integrated time circuit
GND: ground pin of 555D integrated time circuit
OUTPUT: output pin of 555D integrated time circuit

### Description of Invention

The basic function of the present invention is to provide the identification to which port of those many ports present in the system is connected with an external device by means of making use of a single port of the system, thanks to this feature, only one port of the microprocessor within the system shall suffice for identifying as to which port of the system is connected with a device. After identifying the HDMI port with a device attached, the microprocessor in the system shall be able to build communication with the HDMI ports in an order of priority when more than one HDMI port is occupied.

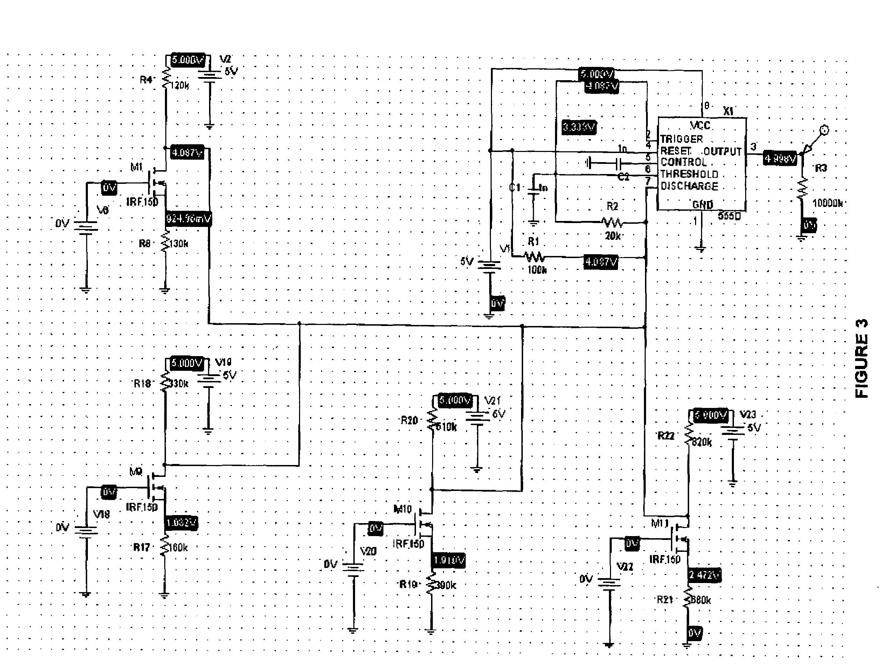

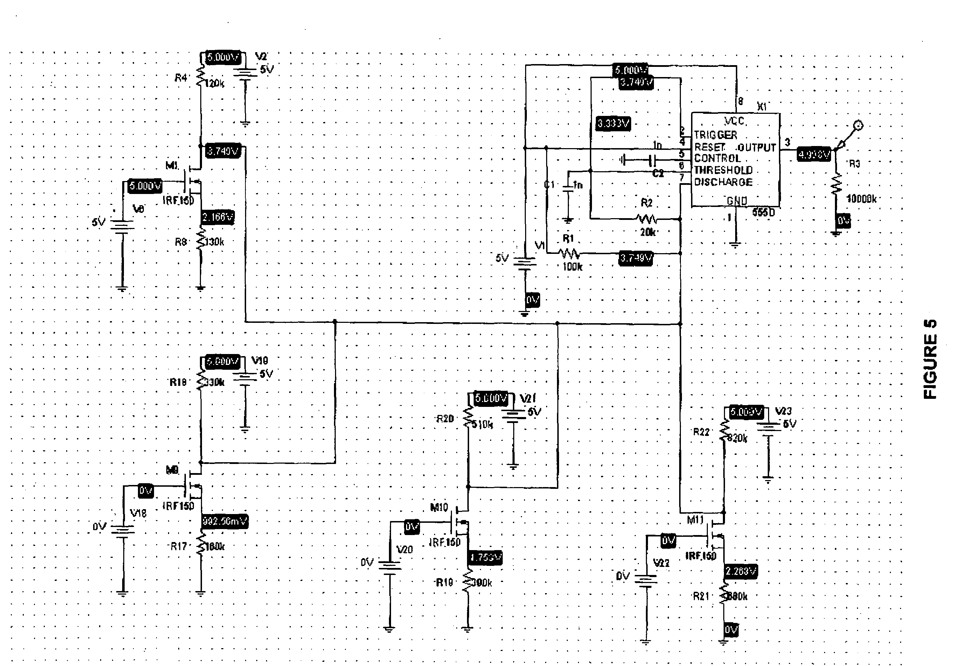

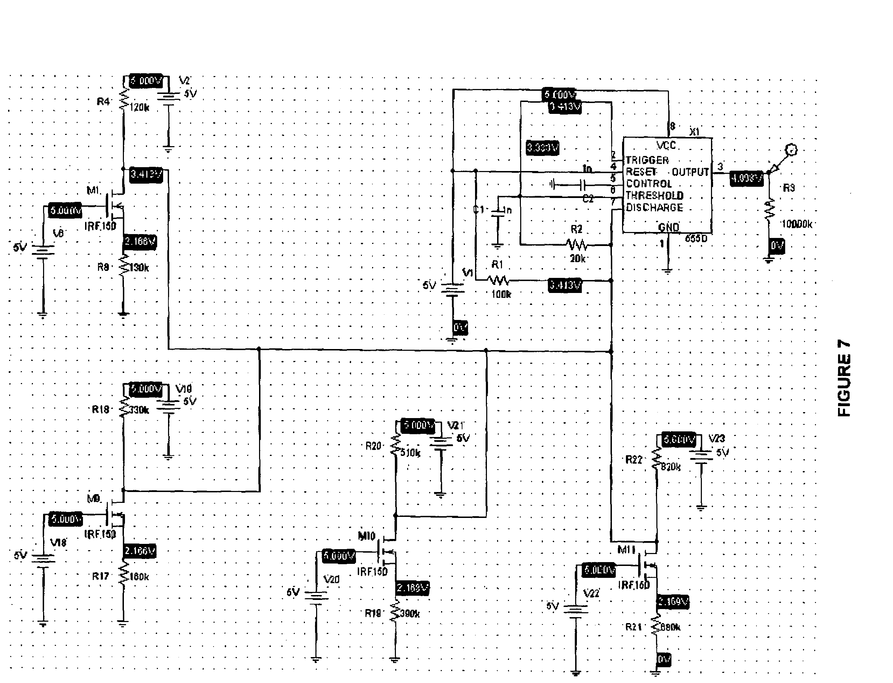

In Figure 2, the operating principle of the present invention is symbolized; according to this operating principle the HDMI ports are connected to the microprocessor port by means of a circuit; the present invention is exemplified by means of a system with 4 HDMI ports in order to make clear the benefits of this invention; so, when any external device is connected to the HDMI 1, HDMI 2, HDMI 3, or HDMI 4 ports of the system, the duty cycle value on the microprocessor's port shall change so that the microprocessor shall be able to detect as to which port is connected with a device according to the duty cycle alteration values previously stored on the microprocessor, likewise, it shall also be identifiable that no external device is connected to the system thanks to the present invention.
It becomes identifiable as to which port is/are connected with external device(s) by means of the circuit in which the present invention is exemplified. The circuit illustrated in figures 3, 5, and 7 is set up for clarifying and exemplifying the present invention; although the circuit elements used in these figures are the same, no device is connected to any HDMI port of the system in Figure 3, one external device is connected to the first port of the system in Figure 5, and external devices are connected to the 1^{st}, 2^{nd}, 3^{rd}, and 4^{th} ports of the system in Figure 7.

A 555D integrated timer circuit is used in the "astable mode" for generating the duty cycle alteration signal in figures 3, 5, and 7; the purpose of the integrated timer circuit is to change the duty cycle depending on the values of capacitors and resistors used; the change in resistance at the "DISCHARGE" input of the integrated circuit changes the duty cycle at the "OUTPUT". The "OUTPUT" of the 555D integrated circuit is connected to the microprocessor of the system; the 10000K resistor indicated as R3 in figures 3, 5, and 7 symbolizes the internal resistance of the microprocessor's connected port.

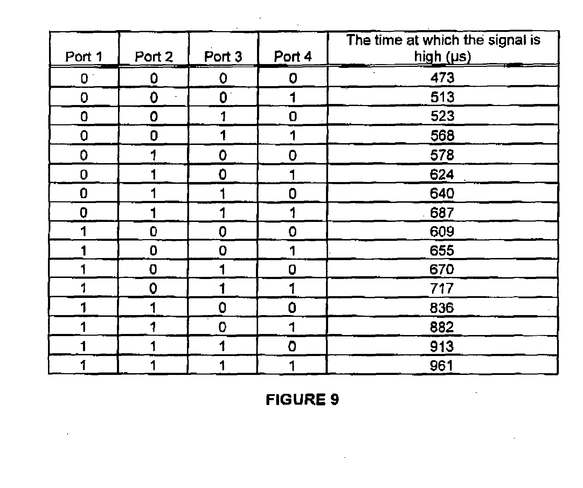

According to the operating principle of the present invention, the gates of the transistors M1, M9, M10, and M11 are connected to the ports HDMI 1, HDMI 2, HDMI 3, or HDMI 4 respectively in figures 3, 5, and 7; these transistors are selected among FET (field-effect transistors )for not drawing any currents. In this exemplar circuit, the gate sections of the transistors M1, M9, M10 and M11 are connected so as to switch the relevant transistor into conduction once any external device is connected to the system. In the system illustrated in figures 3, 5, and 7, once any external device is connected to any of four HDMI ports in the system, one of the transistors M1, M9, M10, or M11 shall be switched to conduction, the resistors connected to the source and the resistors connected to the drain of these transistors shall vary the impedance at the "DISCHARGE" input at the 555D circuit, so that the impedance change at the "DISCHARGE" input will vary the duty cycle of the "OUTPUT" as required by the characteristics of the 555D circuit, and this duty cycle change will be detected by the microprocessor connected to the "OUTPUT", thus it shall become possible to determine as to which ports of the system is/are connected with external device/devices. In order to identify the HDMI ports with external device(s) connected, a table must be prepared to the software side controlling the microprocessor port into which the output of the duty timer enters. It must be written in this table as to which duty cycle value shall mean the presence of an external device connection at which HDMI port; for this purpose, a table like the one given in Figure 9 is maintained in the system on a nonvolatile memory; this memory may be a part of the microprocessor's internal memory.
The cases shall be analyzed below for clarifying purposes in which no external device, only one internal device, and four external devices are connected to four HDMI ports of the system making use of the present invention.

In the case illustrated in Figure 3, the reason why zero V value is seen on the gates of transistors M1, M9, M10, and M11 is that no external device is connected to none of HDMI ports in this instance; if, however, any external device is connected to the system, this device shall raise the voltage difference from 0 to 5V at the gate of any of transistors M1, M9, M10, and M11 by means of the 5V potential difference of itself so as to switch that transistor into conduction, and shall change the system's resistance and the duty cycle at the output of the circuit that controls the duty cycle.

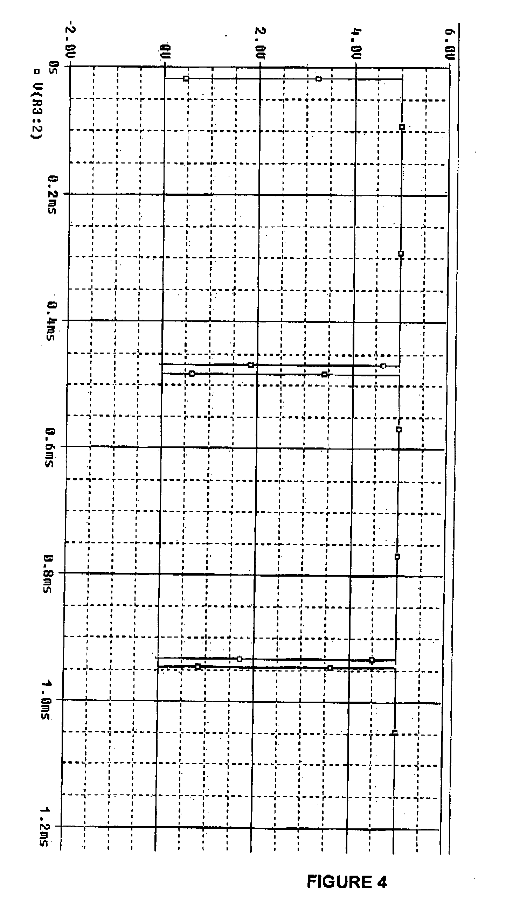

The graphic representing the duty cycle change corresponding to the case illustrated in Figure 3 with no external device connected to none HDMI port is given in Figure 4; in this instance, the time at which the duty cycle is at logic 1 is 0.473 ms for a predetermined period.

In the case of Figure 5, an external device is connected to one HDMI port and such externally-connected device creates a 5V potential difference at the gate of the transistor M1 as required by the characteristic of the HDMI port; in this instance, the reason why zero V is seen here at the gates of transistors M9, M10, and M11, is that no external devices are connected to the ports, except the port to which the transistor M1 is coupled.

Since the external device connected to the port which is coupled to the transistor M1 is attached to the transistor M1 together with its 5V potential difference, it raises the voltage difference at the gate of the transistor M1 from 0 to 5V and switches the transistor into conduction. In this instance the transistor M1 is switched into conduction; the resistor R8 -which is open circuit as the transistor M1 is closed- is included into the impedance seen at the "DISCHARGE" input of the 555D integrated circuit together with the conduction of the transistor M1; the impedance value seen at this input is altered, and the duty cycle at the "OUTPUT" of the 555D integrated circuit is changed, since the impedance value of the "DISCHARGE" input is altered as required by the characteristic of said 555D integrated circuit. Thanks to the duty cycle alteration tables previously loaded onto the microprocessor, the microprocessor detects the change in the duty cycle and concludes that an external device is now connected to the HDMI port to which the transistor M1 is coupled.

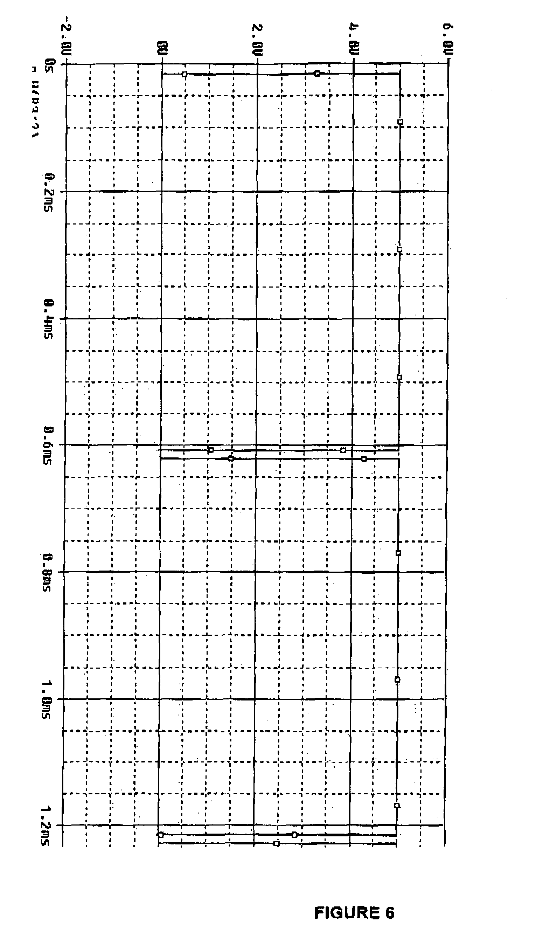

The graphic representing the duty cycle change corresponding to the case illustrated in Figure 5 in which only one device is connected to an HDMI port to which the transistor M1 is coupled is given in Figure 6; in this instance, the time at which the duty cycle is at logic 1 is 0.609 ms for a predetermined period.

In the instance illustrated in Figure 7, external devices are connected to all four HDMI ports of the system and such externally-connected devices has generated a 5V potential difference at the gates of transistors M1, M9, M10, and M11, as required by the characteristics of HDMI ports, so that these four transistors are set to conduct. The resistors R8, R17, R19, and R21 at the sources which are open as the transistors M1, M9, M10, and M11 respectively are in interruption are included in the impedance seen at the "DISCHARGE" input of the 555D integrated circuit once these transistors start conducting, the value of the impedance seen at this input is changed, and the duty cycle at the "OUTPUT" is altered as well, since the impedance of the "DISCHARGE" input is changed, as required by the characteristic of said 555D integrated circuit. Thanks to the duty cycle alteration tables previously loaded onto the microprocessor, the microprocessor detects the change in the duty cycle and concludes that to all HDMI ports are connected with one external device.

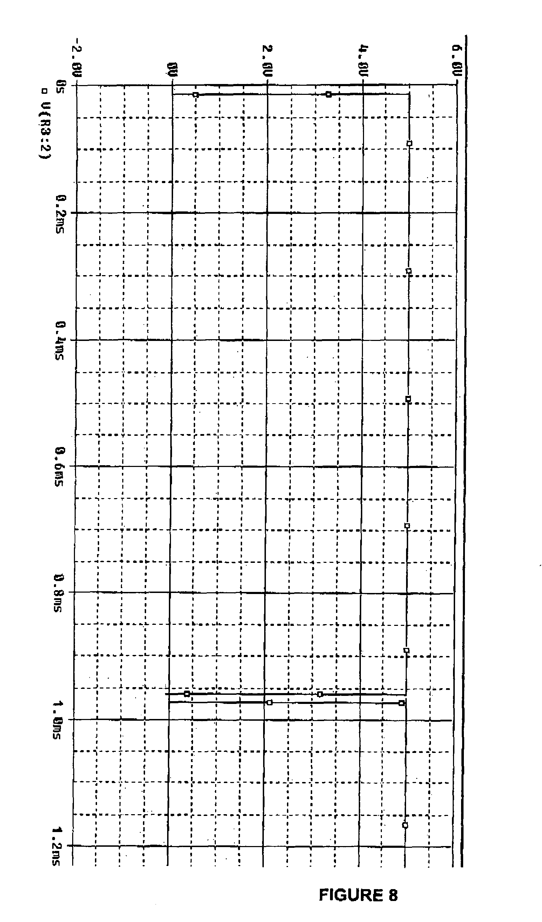

The graphic representing the duty cycle change corresponding to the case illustrated in Figure 7 in which external devices are connected to all HDMI ports is given in Figure 8; in this instance, the time at which the duty cycle is at logic 1 is 0.961 ms for a predetermined period.

The table showing the probability that all ports are open or closed in this illustrative example and the time at which the duty cycle is at logic 1 for these instances is given in Table 9. The values shown in the table of Figure 9 as "1" are logic 1, and those indicated as "0" are logic 0; in instances in which HDMI ports are assumed to be as logic 1, it is concluded that external devices are connected to those ports.

It is possible to make variations on the value of resistors R4, R8, R18, R17, R20, R19, R22, R21 coupled to transistors M1, M9, M10, and M11 in figures 3, 5, and 7, any such alteration influencing the duty cycle's variation.

Although the status of four HDMI ports are observed in this circuit set up in figures 3, 5, and 7 for describing the invention's advantages in detail, it must be kept in mind that even if the number of HDMI ports are more than four, the status of such HDMI ports shall be identifiable by the microprocessor by making use of a single port of said microprocessor.

Thanks to the benefits of the present invention, it becomes possible to observe the status of a plurality of HDMI ports of a system with the microprocessor to which said HDMI ports are coupled, by making use of only one of the ports of the microprocessor.

## Claims

1. A system for identifying whether external devices are connected to HDMI ports and said system comprising at least one microprocessor and more than one HDMI port, **characterized by** comprising
- a number of transistors (M1, M9, M10, M11); which are located outside the microprocessor; as many as the number of HDMI ports respectively connected to said HDMI ports.
- a circuit (555D); which is located outside the microprocessor; capable of generating a signal of which the duty cycle is controlled according to the conduction or interruption state of said transistors, and transmitting said signal to said at least one microprocessor via one port of said at least one microprocessor (R3),
- said at least one microprocessor which concludes which of said HDMI ports is/are connected with external device(s) according to said signal.

2. A system according to Claim 1, **characterized in that** it comprises a nonvolatile memory on which the information indicating as to which of said HDMI ports are connected with external device(s) according to the time of the said signal of which the duty cycle can be controlled is passed at high is stored.

3. A system according to claims 1 and 2, **characterized in that** it comprises the said microprocessor making use of the information stored at said nonvolatile memory while deciding as to which of said HDMI ports are connected with external device(s).

4. A system according to claim 2 or 3, **characterized in that** said nonvolatile memory is a memory area on said microprocessor.

## Patentansprüche

1. System zur Erkennung, ob externe Geräte an HDMI-Ports angeschlossen sind, und wobei das System mindestens einen Mikroprozessor und mehr als einen HDMI-Port umfasst, **dadurch gekennzeichnet, dass** es Folgendes umfasst:
- mehrere außerhalb des Mikroprozessors in gleicher Anzahl wie die HDMI-Ports angeordnete Transistoren (M1, M9, M10, M11), die jeweils an die HDMI-Ports angeschlossen sind,
- eine außerhalb des Mikroprozessors angeordnete Schaltung (555D), die ein Signal erzeugen kann, dessen Einschaltdauer entsprechend dem Leitungs- oder Unterbrechungszustand der Transistoren gesteuert wird, und das Signal über einen Port des mindestens einen Mikroprozessors (R3) an den mindestens einen Mikroprozessor übertragen kann,
- den mindestens einen Mikroprozessor, der entsprechend dem Signal entscheidet, welche/r der HDMI-Ports mit einem externen Gerät/externen Geräten verbunden ist/sind.

2. System nach Anspruch 1, **dadurch gekennzeichnet, dass** es einen nichtflüchtigen Speicher umfasst, in dem Information gespeichert ist, die angibt, welche der HDMI-Ports mit einem externen Gerät/externen Geräten verbunden sind, entsprechend der Zeit des Signals, dessen Einschaltdauer gesteuert werden kann, die es auf Hochpegel verbringt.

3. System nach den Ansprüchen 1 und 2, **dadurch gekennzeichnet, dass** es den Mikroprozessor umfasst, der die im nichtflüchtigen Speicher gespeicherte Information bei der Entscheidung nutzt, welchen der HDMI-Ports mit einem externen Gerät/externen Geräten verbunden sind.

4. System nach Anspruch 2 oder 3, **dadurch gekennzeichnet, dass** es sich bei dem nichtflüchtigen Speicher um einen Speicherbereich im Mikroprozessor handelt.

## Revendications

1. Système pour déterminer si des dispositifs externes sont connectés à des ports HDMI, et ledit système comprenant au moins un microprocesseur et plusieurs ports HDMI, **caractérisé en ce qu'**il comprend :
- un certain nombre de transistors (M1, M9, M10, M11), qui sont situés à l'extérieur du microprocesseur, en un nombre égal au nombre de ports HDMI, respectivement connectés auxdits ports HDMI,
- un circuit (555D), qui est situé à l'extérieur du microprocesseur, capable de générer un signal dont le rapport cyclique est commandé en fonction de l'état de conduction ou de blocage desdits transistors, et de transmettre ledit signal audit au moins un microprocesseur par l'intermédiaire d'un port dudit au moins un microprocesseur (R3),
- ledit au moins un microprocesseur qui détermine lequel ou lesquels desdits ports HDMI est ou sont connecté(s) à un ou des dispositifs externes en fonction dudit signal.

2. Système selon la revendication 1, **caractérisé en ce qu'**il comprend une mémoire non volatile dans laquelle les informations indiquant lesquels desdits ports HDMI sont connectés à un ou des dispositifs externes en fonction de l'instant auquel ledit signal dont le rapport cyclique peut être commandé est passé au niveau haut sont mémorisées.

3. Système selon les revendications 1 et 2, **caractérisé en ce qu'**il comprend ledit microprocesseur qui utilise les informations mémorisées dans ladite mémoire non volatile alors qu'il détermine quels ports HDMI parmi lesdits ports HDMI sont connectés à un ou des dispositifs externes.

4. Système selon la revendication 2 ou 3, **caractérisé en ce que**l ladite mémoire non volatile est une zone de mémoire dudit microprocesseur.
